# EUROPÄISCHE PATENTANMELDUNG

(11) **EP 1 724 492 A1**
(43) Veröffentlichungstag der Anmeldung: **22.11.2006**
(21) Anmeldenummer: 06009740.9
(22) Anmeldetag: 11.05.2006
(51) Int. Cl.: F16F 9/512

(54) **Dämpfer**

(30) Priorität: 19.05.2005 DE 102005023756
(71) Anmelder: SUSPA Holding GmbH, 90518 Altdorf (DE)
(72) Erfinder: Frisch, Emil, 90411 Nürnberg (DE); Löscher, Roland, 91058 Tennenlohe (DE); Papp, Erwin, 92318 Neumarkt (DE); Spielberg, Daniel, Dr., 90518 Altdorf (DE)
(74) Vertreter: Rau, Albrecht

(57) **Zusammenfassung**

Bei einem Dämpfer (1) ist zur Erzielung eines sich anpassenden Dämpfungsverhaltens vorgesehen, dass ein Kolben (13) mindestens einen Durchström-Kanal (69, 70) zum Verbinden eines ersten und eines zweiten Teil-Arbeitsraumes (15, 16) und mindestens ein Verschluss-Element (58, 60) aufweist, wobei mittels des mindestens einen Verschluss-Elements (58, 60) eine wirksame Strömungsquerschnittsfläche für ein Dämpfungsfluid (11) in Abhängigkeit einer Geschwindigkeit des Kolbens (13) veränderbar und somit ein extrem progressives Dämpfungsverhalten erzielbar ist.

## Beschreibung

Die Erfindung betrifft einen Dämpfer, insbesondere einen Hydraulikdämpfer.

Hydraulikdämpfer sind in großer Zahl bekannt. Derartige Dämpfer weisen ein mit einem Dämpfungsfluid gefülltes Gehäuse auf, in dem ein an einer Kolbenstange befestigter Kolben relativ zu dem Gehäuse verschiebbar angeordnet ist. Der Kolben weist ein oder mehrere Kanäle auf, durch die das Dämpfungsfluid bei einer Bewegung der Kolbenstange und des Kolbens relativ zu dem Gehäuse gedrückt wird. Bei derartigen Dämpfern nimmt die Dämpfungskraft mit zunehmender Einschub- oder Ausschub-Geschwindigkeit progressiv zu. Die Dämpfungskraft-Geschwindigkeits-Kennlinie derartiger Dämpfer ist somit parabelförmig. Nachteilig bei derartigen Dämpfern ist, dass diese eine fest vorgegebene, parabelförmige Dämpfungskraft-Geschwindigkeits-Kennlinie aufweisen.

Der Erfindung liegt die Aufgabe zugrunde, einen Dämpfer zu schaffen, der eine stark progressive Dämpfungskraft-Geschwindigkeits-Kennlinie besitzt und gleichzeitig einfach aufgebaut ist.

Diese Aufgabe wird durch die Merkmale des Anspruches 1 gelöst. Der Kern der Erfindung besteht darin, dass der Dämpfer einen Kolben mit mindestens einem Durchström-Kanal und mindestens einem Verschluss-Element aufweist. Der mindestens eine Durchström-Kanal weist bei einer Bewegung des Kolbens entlang der Mittel-Längs-Achse für das durchströmende Dämpfungsfluid eine wirksame Strömungsquerschnittsfläche auf, wobei die wirksame Strömungsquerschnittsfläche in Abhängigkeit der Geschwindigkeit des Kolbens durch das mindestens eine Verschluss-Element verändert wird. Durch die selbsttätige Veränderung der wirksamen Strömungsquerschnittsfläche in Abhängigkeit der Geschwindigkeit des Kolbens wird der Strömungswiderstand für das Dämpfungsfluid verändert, wodurch die Dämpfungskraft-Geschwindigkeits-Kennlinie des Dämpfers verändert wird. Bei einer niedrigen Einschub- oder Ausschub-Geschwindigkeit des Kolbens bleibt das mindestens eine Verschluss-Element relativ zu dem mindestens einen Durchström-Kanal in einem Ruhe-Zustand, sodass die wirksame Strömungsquerschnittsfläche relativ zu dem Ruhe-Zustand im Wesentlichen nicht verändert wird. Der Ruhe-Zustand ist bei einem Stillstand des Kolbens im Vergleich zu dem Gehäuse gegeben. Bei einer Bewegung des Kolbens wird mit betragsmäßig zunehmender Geschwindigkeit infolge einer Kraft des Dämpfungsfluids der Ruhe-Zustand des mindestens einen Verschluss-Elements zunehmend verändert, wodurch der mindestens eine Durchström-Kanal schrittweise und/oder kontinuierlich und/oder schlagartig verschlossen und die wirksame Strömungsquerschnittsfläche verringert, insbesondere stark verringert, wird. Eine Verringerung der Strömungsquerschnittsfläche wirkt für das Dämpfungsfluid als Drosselung, wodurch sich der Strömungswiderstand erhöht. Die Dämpfungskraft-Geschwindigkeits-Kennlinie des Dämpfers ist somit nicht konstant parabelförmig, sondern wird in Abhängigkeit von dem Betrag der Geschwindigkeit des Kolbens steiler. Mit dem erfindungsgemäßen Dämpfer ist eine extreme Progression der Dämpfungskraft-Geschwindigkeits-Kennlinie erzielbar. Dadurch, dass der Ruhe-Zustand des mindestens einen Verschluss-Elements bei einer Bewegung des Kolbens durch eine Kraft des Dämpfungsfluids verändert wird, passt der Dämpfer die Dämpfungskraft-Geschwindigkeits-Kennlinie selbst an.

Weitere Ausgestaltungen der Erfindung ergeben sich aus den Unteransprüchen.

Zusätzliche Merkmale und Einzelheiten der Erfindung ergeben sich aus der Beschreibung von mehreren Ausführungsbeispielen anhand der Zeichnungen. Es zeigen:
- Fig. 1: einen Längsschnitt eines Dämpfers gemäß einem ersten Ausführungsbeispiel,
- Fig. 2: einen Querschnitt des Dämpfers entlang der Schnittlinie II-II in Fig. 1,
- Fig. 3: eine vergrößerte Darstellung eines Kolbens gemäß Fig. 1,
- Fig. 4: eine Draufsicht auf den Kolben gemäß Fig. 3 in Richtung IV,
- Fig. 5: einen Teil-Längsschnitt durch einen Dämpfer gemäß einem zweiten Ausführungsbeispiel,
- Fig. 6: einen Teil-Längsschnitt durch einen Dämpfer gemäß einem dritten Ausführungsbeispiel,
- Fig. 7: einen Teil-Längsschnitt durch einen Dämpfer gemäß einem vierten Ausführungsbeispiel in einem Ruhe-Zustand,
- Fig. 8: einen Teil-Längsschnitt durch den Dämpfer gemäß Fig. 7 bei einer Bewegung des Kolbens, und
- Fig. 9: einen Teil-Längsschnitt durch einen Dämpfer gemäß einem fünften Ausführungsbeispiel.

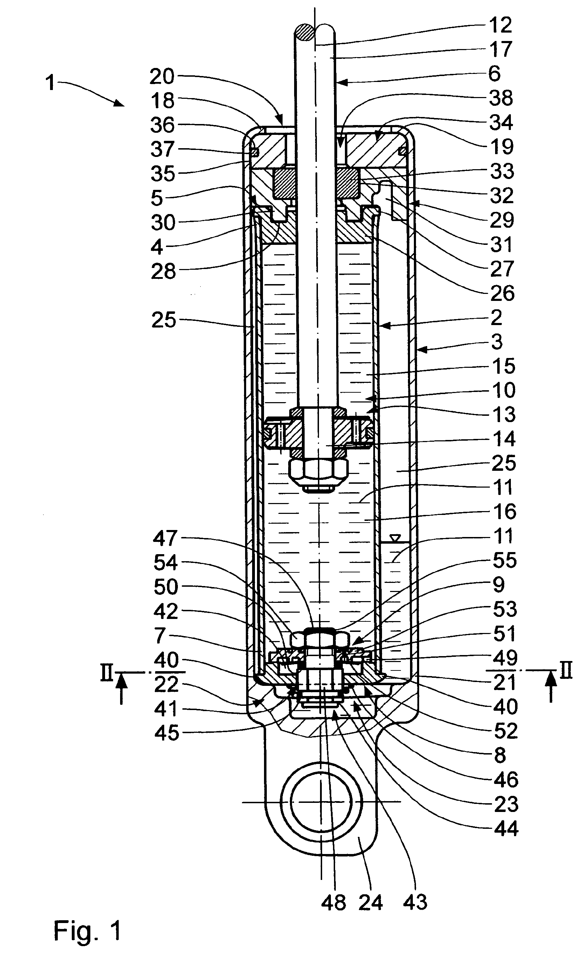

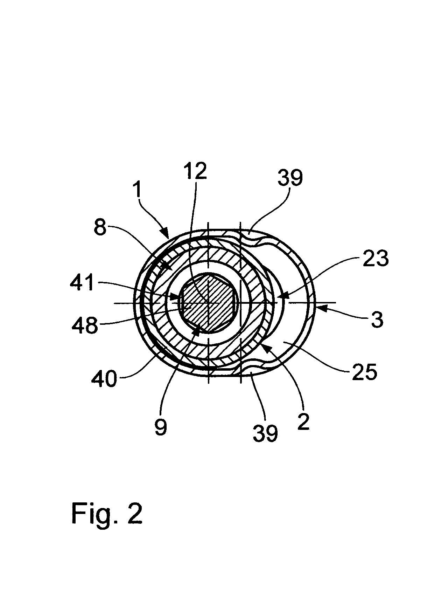

Im Folgenden wird unter Bezugnahme auf die Figuren 1 bis 4 ein erstes Ausführungsbeispiel der Erfindung beschrieben. Ein als Ganzes mit 1 bezeichneter Dämpfer ist in Form eines Hydraulikdämpfers ausgebildet und weist ein im Wesentlichen hohlzylinderförmiges, inneres Gehäuse 2 und ein das innere Gehäuse 2 umgebendes äußeres Gehäuse 3 auf.

Das innere Gehäuse 2 ist an einem ersten Gehäuse-Ende 4 durch eine Führungs- und Dichtungseinheit 5 zur Führung und Abdichtung einer aus dem ersten Gehäuse-Ende 4 herausgeführten Kolbenstange 6 verschlossen. An einem dem ersten Gehäuse-Ende 4 gegenüberliegenden zweiten Gehäuse-Ende 7 ist das innere Gehäuse 2 durch einen ringförmigen Gehäuse-Deckel 8 mit einem Ausgleichsventil 9 verschlossen. Das innere Gehäuse 2, die Führungs- und Dichtungseinheit 5 und der Gehäuse-Deckel 8 umschließen im Wesentlichen einen Arbeitsraum 10, der mit einem Dämpfungsfluid 11 gefüllt ist. In dem inneren Gehäuse 2 ist konzentrisch zu einer Mittel-Längs-Achse 12 ein entlang dieser verschiebbar geführter Kolben 13 angeordnet, der an einem ersten Kolbenstangen-Ende 14 befestigt ist. Der Kolben 13 unterteilt den Arbeitsraum 10 in einen dem ersten Gehäuse-Ende 4 zugewandten ersten Teil-Arbeitsraum 15 und einen dem zweiten Gehäuse-Ende 7 zugewandten zweiten Teil-Arbeitsraum 16. An einem außerhalb des inneren Gehäuses 2 und des äußeren Gehäuses 3 angeordneten zweiten Kolbenstangen-Ende 17 ist ein nicht dargestelltes Befestigungs-Element angeformt.

Das äußere Gehäuse 3 weist einen im Wesentlichen ovalen Querschnitt auf und umgibt das innere Gehäuse 2. Ein erstes Gehäuse-Ende 18 ist zur Ausbildung eines Gehäuse-Anschlages 19 umgebördelt, wobei eine GehäuseÖffnung 20 begrenzt wird, durch die die Kolbenstange 6 geführt ist. Ein dem ersten Gehäuse-Ende 18 gegenüberliegendes zweites Gehäuse-Ende 21 des äußeren Gehäuses 3 ist durch einen einteilig mit dem äußeren Gehäuse 3 ausgebildeten Gehäuse-Boden 22 verschlossen. Der Gehäuse-Boden 22 ist auf der dem inneren Gehäuse 2 zugewandten Seite zur Aufnahme des Ausgleichsventils 9 mit einer stufenförmigen Gehäuse-Boden-Vertiefung 23 versehen. An einer dem inneren Gehäuse 2 abgewandten Seite des Gehäuse-Bodens 22 ist einteilig ein Befestigungs-Element 24 ausgebildet, wobei das Befestigungs-Element 24 im Wesentlichen mittig zu der Mittel-Längs-Achse 12 ausgerichtet ist.

Das innere Gehäuse 2 und das äußere Gehäuse 3 sind derart versetzt zueinander angeordnet, dass ein Ausgleichsraum 25 in Form eines Ringspaltes mit einem ovalen Querschnitt gebildet wird. Der Ausgleichsraum 25 weist entlang seines Umfanges eine nicht konstante Breite auf. Der Ausgleichsraum 25 erstreckt sich zusätzlich in die Gehäuse-Boden-Vertiefung 23. Der Ausgleichsraum 25 kann unter Druck stehen und ist teilweise mit dem Dämpfungsfluid 11, beispielsweise Öl, und Gas, beispielsweise Stickstoff, gefüllt.

Zur Befestigung des inneren Gehäuses 2 in dem äußeren Gehäuse 3 im Bereich der ersten Gehäuse-Enden 4, 18 weist die Führungs- und Dichtungseinheit 5 einen ersten Dichtring 26 auf, der im Bereich des ersten GehäuseEndes 4 in das innere Gehäuse 2 teilweise eingeführt ist und mit einem Dichtring-Anschlag 27 gegen das erste Gehäuse-Ende 4 anliegt. Der erste Dichtring 26 weist auf einer dem Kolben 13 abgewandten Seite eine konzentrisch zu der Mittel-Längs-Achse 12 angeordnete Ringnut 28 auf. Auf den ersten Dichtring 26 ist ein Positionier-Element 29 aufgesetzt, wobei das Positionier-Element 29 einen ringförmigen Positionier-Element-Vorsprung 30 aufweist, der in die Ringnut 28 eingreift. Das Positionier-Element 29 weist einen dem Innenumfang des äußeren Gehäuses 3 entsprechenden Außenumfang auf, wobei zum Ausgleich von Toleranzen in dem Positionier-Element 29 eine Positionier-Element-Ausnehmung 31 vorgesehen ist. An einer dem ersten Dichtring 26 abgewandten Seite weist das Positionier-Element 29 eine konzentrisch zu der Mittel-Längs-Achse 12 angeordnete und zu der Kolbenstange 6 hin offene Positionier-Element-Ringnut 32 auf. In der Positionier-Element-Ringnut 32 ist ein zweiter Dichtring 33 angeordnet, der mit dem Positionier-Element 29 bündig abschließt. Der erste Dichtring 26, das Positionier-Element 29 und der zweite Dichtring 33 bilden die Führungs- und Dichtungseinheit 5. Zwischen der Führungs- und Dichtungseinheit 5 und dem Gehäuse-Anschlag 19 ist zur Fixierung des zweiten Dichtrings 33 ein Fixier-Element 34 angeordnet, das einen dem Innenumfang des äußeren Gehäuses 3 entsprechenden Außenumfang aufweist. An einer Umfangswand 35 des Fixier-Elements 34 ist eine Fixier-Element-Nut 36 vorgesehen, in der ein dritter Dichtring 37 zur Abdichtung des Ausgleichsraums 25 angeordnet ist. Zur Durchführung der Kolbenstange 6 weist das Fixier-Element 34 eine konzentrisch zu der Mittel-Längs-Achse 12 angeordnete Fixier-Element-Öffnung 38 auf.

Im Bereich der zweiten Gehäuse-Enden 7, 21 erfolgt die Befestigung des inneren Gehäuses 2 an dem äußeren Gehäuse 3 durch den Gehäuse-Deckel 8 und kugelkalottenförmige Vertiefungen 39, die derart an dem äußeren Gehäuse 3 ausgebildet sind und sich in Richtung des inneren Gehäuses 2 erstrecken, dass das innere Gehäuse 2 an dem äußeren Gehäuse 3 formschlüssig befestigt wird. Der Gehäuse-Deckel 8 ist ringförmig ausgebildet und liegt mit einem in radialer Richtung über das innere Gehäuse 2 vorspringenden Gehäuse-Deckel-Anschlag 40 gegen das zweite Gehäuse-Ende 7 an. Der vorspringende Gehäuse-Deckel-Anschlag 40 liegt zusätzlich teilweise gegen das äußere Gehäuse 3 und den Gehäuse-Boden 22 an, sodass das innere Gehäuse 2 entlang der Mittel-Längs-Achse 12 und infolge der Vertiefungen 39 auch in radialer Richtung fixiert ist.

Zur Aufnahme des Ausgleichsventils 9 weist der Gehäuse-Deckel 8 eine konzentrisch zu der Mittel-Längs-Achse 12 angeordnete Gehäuse-Deckel-Bohrung 41 auf, die in eine ringförmige Gehäuse-Deckel-Ausnehmung 42 übergeht. Die Gehäuse-Deckel-Bohrung 41 weist einen runden Querschnitt auf. Durch die Gehäuse-Deckel-Bohrung 41 ist ein Ventilstift 43 geführt, der an einem ersten Ventilstift-Ende 44 einen ersten Ventilstift-Anschlag 45 aufweist. Eine konisch zulaufende Ventil-Schraubenfeder 46 liegt gegen den ersten Ventilstift-Anschlag 45 und gegen den Gehäuse-Deckel 8 an. Zwischen dem ersten Ventilstift-Ende 44 und einem zweiten Ventilstift-Ende 47 ist eine mehrkantige Ventilstift-Führungsmutter 48 angeordnet, deren Kanten gegen den Gehäuse-Deckel 8 anliegen. Die Ventilstift-Führungsmutter 48 verschließt die Gehäuse-Deckel-Bohrung 41 durch ihre mehrkantige Ausbildung nicht vollständig. Die Ventilstift-Führungsmutter 48 bildet einen zweiten Ventilstift-Anschlag 50 aus, gegen den eine auf dem Ventilstift 43 angeordnete Distanzscheibe anliegt. Auf der Distanzscheibe ist wiederum eine Ventil-Tellerfeder 52 und eine Ventilscheibe 53 angeordnet, die gegen die vorgespannte Ventil-Tellerfeder 52 anliegt. Die Ventilscheibe 53 weist einen ersten Ventilscheiben-Kanal 49 und einen zweiten Ventilscheiben-Kanal 51 auf. Der erste Ventilscheiben-Kanal 49 verläuft in radialer Richtung und stellt eine ständige Verbindung zwischen dem zweiten Teil-Arbeitsraum 16 und der Gehäuse-Deckel-Ausnehmung 42 her. Der zweite Ventilscheiben-Kanal 51 verläuft parallel zu der Mittel-Längs-Achse 12 durch die Ventilscheibe 53 und wird von der Ventil-Tellerfeder 52 verschlossen. Die Ventilscheibe 53 wird durch eine Sicherungsmutter 54 auf dem Ventilstift 43 gesichert, wobei die Sicherungsmutter 54 auf ein an dem zweiten Ventilstift-Ende 47 angebrachtes Gewinde 55 aufgeschraubt ist.

Die Kolbenstange 6 weist an ihrem ersten Kolbenstangen-Ende 14 einen reduzierten Durchmesser auf, wodurch ein Kolbenstangen-Anschlag 56 ausgebildet wird. Auf dem ersten Kolbenstangen-Ende 14 sind ausgehend vom Kolbenstangen-Anschlag 56 eine erste Kolbenstangen-Distanzscheibe 57, ein erstes Verschluss-Element 58 in Form einer Tellerfeder, eine Kolben-Scheibe 59, ein zweites Verschluss-Element 60 in Form einer Tellerfeder, eine zweite Kolbenstangen-Distanzscheibe 61 und eine Kolbenstangen-Sicherungsmutter 62 angeordnet. Die Kolbenstangen-Sicherungsmutter 62 ist auf ein Kolbenstangen-Gewinde 63 aufgeschraubt und sichert den Kolben 13 auf der Kolbenstange 6. Der Kolben 13 wird durch das erste Verschluss-Element 58, die Kolben-Scheibe 59, das zweite Verschluss-Element 60 und eine Kolben-Dichtung 64 gebildet. Die Kolben-Dichtung 64 ist ringförmig ausgebildet und in einer Kolben-Nut 65 angeordnet, wobei die Kolben-Nut 65 in einer dem inneren Gehäuse 2 zugewandten Außenwand 66 ausgebildet ist. Die Kolben-Dichtung 64 dichtet die Kolben-Scheibe 59 gegen das innere Gehäuse 2 ab.

Das erste Verschluss-Element 58 ist bei einer Bewegung der Kolbenstange 6 in einer Ausschub-Richtung 67 wirksam und wird im Folgenden als Zug-Tellerfeder bezeichnet. Das zweite Verschluss-Element 60 ist in einer Einschub-Richtung 68 wirksam und wird im Folgenden als Druck-Tellerfeder bezeichnet. Die Zug-Tellerfeder 58 wirkt mit mehreren Zug-Durchström-Kanälen 69 und die Druck-Tellerfeder 60 mit mehreren Druck-Durchström-Kanälen 70 zusammen. Die Durchström-Kanäle 69, 70 weisen jeweils einen quer zu der Mittel-Längs-Achse 12 verlaufenden Quer-Kanal 71 und einen mit dem Quer-Kanal 71 verbundenen und entlang der Mittel-Längs-Achse 12 verlaufenden Längs-Kanal 72 auf. Die Durchström-Kanäle 69, 70 sind in der Kolben-Scheibe 59 ausgebildet und stellen eine Verbindung zwischen dem ersten Teil-Arbeitsraum 15 und dem zweiten Teil-Arbeitsraum 16 her. Die Zug-Durchström-Kanäle 69 sind ― in Einschub-Richtung 68 betrachtet ― aus dem Längs-Kanal 72 und dem sich daran anschließenden Quer-Kanal 71 aufgebaut. Die Druck-Durchström-Kanäle 70 sind dagegen durch den Quer-Kanal 71 und den daran anschließenden Längs-Kanal 72 aufgebaut. Die Längs-Kanäle 72 der Zug-Durchström-Kanäle 69 sind derart in der Kolben-Scheibe 59 angeordnet, dass sie durch die elastisch verformbare Zug-Tellerfeder 58 verschließbar sind. Entsprechend sind die Längs-Kanäle 72 der Druck-Durchström-Kanäle 70 derart in der Kolben-Scheibe 59 angeordnet, dass sie durch die elastisch verformbare Druck-Tellerfeder 60 verschließbar sind. Die Durchström-Kanäle 69, 70 weisen bei einer Bewegung des Kolbens 13 in Ausschub-Richtung 67 oder in Einschub-Richtung 68 jeweils eine wirksame Strömungsquerschnittsfläche auf, die durch ein Verschließen einzelner oder mehrerer Durchström-Kanäle 69, 70 veränderbar ist. Unter der wirksamen Strömungsquerschnittsfläche ist ein für die Dämpfungskraft-Geschwindigkeits-Kennlinie des Dämpfers 1 wirksamer Querschnitt der Durchström-Kanäle 69, 70 zu verstehen, wobei der Querschnitt der Durchström-Kanäle 69, 70 entlang von diesen beliebig sein kann. Die wirksame Strömungsquerschnittsfläche ist somit als ein resultierender Querschnitt der Durchström-Kanäle 69, 70 zu verstehen.

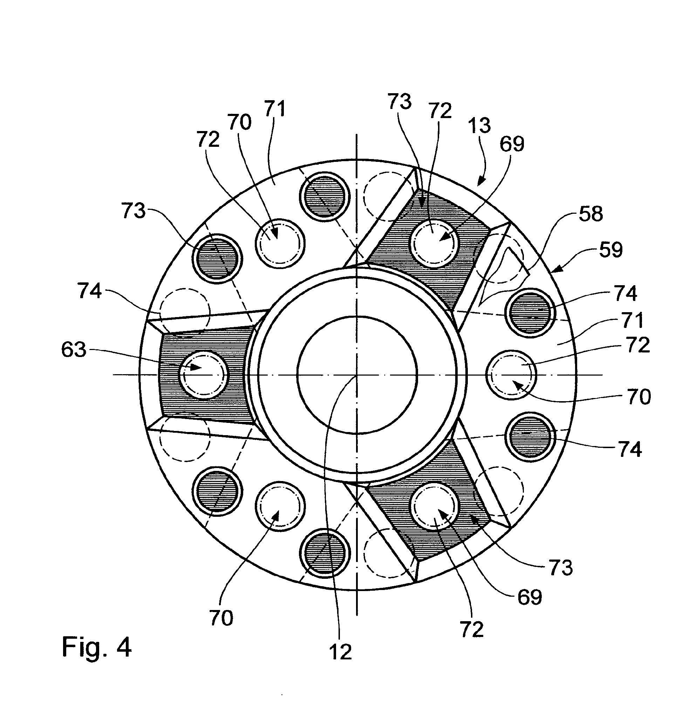

Die Zug-Durchström-Kanäle 69 sind in einem Winkel von 120 ° um die Mittel-Längs-Achse 12 beabstandet zueinander angeordnet. Entsprechend sind die Druck-Durchström-Kanäle 70 in einem Winkel von 120 ° beabstandet zueinander angeordnet, wobei diese jeweils um 60 ° zu den benachbarten Zug-Durchström-Kanälen 69 beabstandet sind. Durch zwei benachbarte Quer-Kanäle 71 wird jeweils eine erhöhte Anlagefläche 73 auf der Kolben-Scheibe 59 für die Tellerfedern 58, 60 erzeugt. In Figur 4 ist die Zug-Tellerfeder 58 dargestellt, die in den schraffierten Ringsegmenten gegen die Kolben-Scheibe 59 anlegbar ist. Die schraffierten Ringsegmente stellen für die Zug-Tellerfeder 58 somit die Anlageflächen 73 dar, wobei jedem Zug-Durchström-Kanal 69 eine Anlagefläche 73 zugeordnet ist. Zwischen zwei benachbarten Anlageflächen 73 sind jeweils in dem Quer-Kanal 71 der Druck-Durchström-Kanäle 70 zwei entsprechend den Anlageflächen 73 erhöhte Tellerfeder-Anschläge 74 angeordnet. Die Tellerfeder-Anschläge 74 weisen einen runden Querschnitt auf und sind in Figur 4 schraffiert dargestellt. In Figur 4 sind weiterhin die Anlageflächen 73 und die Tellerfeder-Anschläge 74 für die Druck-Tellerfeder 60 durch Linien angedeutet.

Die Tellerfedern 58, 60 sind planar ausgebildet. Die Anlageflächen 73 sind relativ zu einer senkrecht zu der Mittel-Längs-Achse 12 verlaufenden Radial-Ebene abgeschrägt, sodass die Tellerfedern 58, 60 mit den zugehörigen Anlageflächen 73 einen Winkel b einschließen. Der Winkel b liegt zwischen 0,5 ° und 10 °, insbesondere zwischen 1,5 ° und 5 °, und insbesondere zwischen 2 ° und 4 °, bevorzugt 2,5 °. Alternativ ist auch eine planare Ausbildung der Anlageflächen 73 und eine relativ zu der RadialEbene abgeschrägte Ausbildung der Tellerfedern 58, 60 möglich. Weiterhin ist es möglich, dass die Anlageflächen 73 der einzelnen Zug-Durchström-Kanälen 69 oder Druck-Durchström-Kanälen 70 mit der zugehörigen Zug-Tellerfeder 58 oder der Druck-Tellerfeder 60 einen voneinander abweichenden Winkel b einschließen. Beispielsweise können die Anlageflächen 73 der einzelnen Zug-Durchström-Kanäle 69 mit der Zug-Tellerfeder 58 Winkel b einschließen, die gestaffelt sind, beispielsweise 1 ° 2 ° und 3 °. Durch eine derartige Staffelung der Winkel b ist ein sukzessives Verschließen der Zug-Durchström-Kanäle 69 in Abhängigkeit von einer Ausschub-Geschwindigkeit des Kolbens 13 möglich. Weiterhin können die zu der Zug-Tellerfeder 58 und der Druck-Tellerfeder 60 zugehörigen Anlageflächen 73 mit diesen einen unterschiedlichen Winkel b einschließen, sodass in Ausschub-Richtung 67 und in Einschub-Richtung 68 unterschiedliche Dämpfungskraft-Geschwindigkeits-Kennlinien erzielbar sind. Unterschiedliche Dämpfungskraft-Geschwindigkeits-Kennlinien in Ausschub- und Einschub-Richtung 67, 68 sind auch durch eine unterschiedliche Ausgestaltung der Zug-Tellerfeder 58 und der Druck-Tellerfeder 60 möglich. Die Zug-Tellerfeder 58 und die Druck-Tellerfeder 60 können auch als Federpaket ausgestaltet sein.

Der Dämpfer 1 weist eine bevorzugte Einbaulage derart auf, dass die Einschub-Richtung 68 mit der Richtung der Schwerkraft identisch ist. Die nachfolgend beschriebene Funktion des Dämpfers 1 ist bis zu einem Verdrehwinkel von 77 ° aus der bevorzugten Einbaulage gewährleistet.

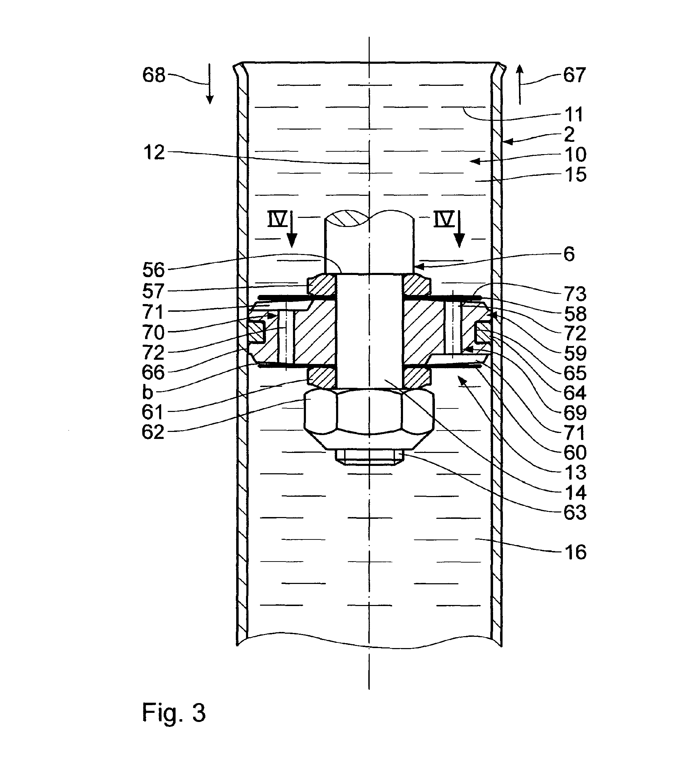

Im Folgenden wird die Funktion des Dämpfers 1 beschrieben. Figur 3 zeigt den Ruhe-Zustand des Dämpfers 1. Die Tellerfedern 58, 60 liegen nicht gegen die zugehörigen Anlageflächen 73 an und die Durchström-Kanäle 69, 70 sind nicht verschlossen. Bei einer Bewegung des Kolbens 13 in Ausschub-Richtung 67 oder in Einschub-Richtung 68 mit niedriger Geschwindigkeit bleibt der Kolben 13, insbesondere die Tellerfedern 58, 60, im Wesentlichen in dem in Figur 3 dargestellten Ruhe-Zustand. Das Dämpfungsfluid 11 kann bei einer Bewegung des Kolbens 13 durch die Durchström-Kanäle 69, 70 strömen. Die Tellerfedern 58, 60 lassen einen ausreichenden Spalt zwischen sich und den zugehörigen Anlageflächen 73, sodass das Dämpfungsfluid 11 in den jeweils anderen Teil-Arbeitsraums 15, 16 gelangen kann. Die Dämpfungskraft-Geschwindigkeits-Kennlinie ist bei geringer Geschwindigkeit durch die wirksamen Strömungsquerschnittsfläche der Durchström-Kanäle 69, 70 gegeben.

Im Folgenden wird die Funktion des Dämpfers 1 bei einer Bewegung des Kolbens 13 in Ausschub-Richtung 67 beschrieben, wobei die Ausschub-Geschwindigkeit im Vergleich zu der oben beschriebenen Bewegung des Kolbens 13 wesentlich höher ist. Für eine Bewegung des Kolbens 13 in Einschub-Richtung 68 gilt die nachfolgend beschriebene Funktionsweise entsprechend. Bei einer Bewegung des Kolbens 13 wird durch das in dem ersten Teil-Arbeitsraums 15 befindliche Dämpfungsfluid 11 eine Kraft auf die Zug-Tellerfeder 58 ausgeübt. Mit zunehmender Kraft wird die Zug-Tellerfeder 58 zunehmend elastisch verformt und gegen die zugehörigen Anlageflächen 73 der Zug-Durchström-Kanäle 69 gepresst, wobei die wirksame Strömungsquerschnittsfläche zunehmend verringert wird. Bei einer ausreichenden Kraft liegt die Zug-Tellerfeder 58 vollständig gegen die Anlageflächen 73 an, sodass die Zug-Durchström-Kanäle 69 vollständig verschlossen sind. Das Dämpfungsfluid 11 kann in diesem Fall lediglich durch die Druck-Durchström-Kanäle 70 strömen. Dadurch, dass die Zug-Tellerfeder 58 im Bereich der Quer-Kanäle 71 der Druck-Durchström-Kanäle 70 gegen die Tellerfeder-Anschläge 74 anliegt, werden die Quer-Kanäle 71 der Druck-Durchström-Kanäle 70 nicht verschlossen. Die Druck-Tellerfeder 60 wird durch das strömende Dämpfungsfluid 11 von den zugehörigen Anlageflächen 73 weg gedrückt, sodass zwischen der Druck-Tellerfeder 60 und den zugehörigen Anlageflächen 73 ein über den Winkel b hinausgehender Spalt zum Durchströmen gebildet wird. Durch das Verschließen der Zug-Durchström-Kanäle 69 wird die wirksame Strömungsquerschnittsfläche verringert, wodurch der Strömungswiderstand für das Dämpfungsfluid 11 beim Strömen von dem ersten Teil-Arbeitsraum 15 in den zweiten Teil-Arbeitsraum 16 erhöht wird. Die Steigung der Dämpfungskraft-Geschwindigkeits-Kennlinie nimmt durch den Verschluss der Zug-Durchström-Kanäle 69 progressiv zu. Sind die Winkel b, die die einzelnen Anlageflächen 73 mit der Zug-Tellerfeder 58 einschließen, gestaffelt, so legt sich die Zug-Tellerfeder 58 in Abhängigkeit von der Ausschub-Geschwindigkeit gestaffelt an die Anlageflächen 73 an, wobei zunächst die Anlagefläche 73 verschlossen wird, die mit der Zug-Tellerfeder 58 den geringsten Winkel b einschließt. Durch das stufenweise Verschließen der Zug-Durchström-Kanäle 69 ist eine gestaffelte Änderung der Progression des Dämpfers 1 möglich. Kommt die Bewegung des Kolbens 13 zum Stillstand, so nimmt die Zug-Tellerfeder 58 wieder ihren Ruhe-Zustand ein. Die Reversibilität der Zug-Tellerfeder 58 ist durch die Wahl des Winkels b gewährleistet.

Das Ausgleichsventil 9 stellt über den ersten Ventilscheiben-Kanal 49, die Gehäuse-Deckel-Ausnehmung 42 und den von dem Gehäuse-Deckel 8 und der Ventilstift-Führungsmutter 48 gebildeten Zwischenraum zum Druckausgleich eine ständige Verbindung zwischen dem Arbeitsraum 10 und dem Ausgleichsraum 25 her. Bei einem extrem schnellen Einschub der Kolbenstange 6 strömt das Dämpfungsfluid 11 ― als Überlastsicherung - zusätzlich durch den zweiten Ventilscheiben-Kanal 51, wobei die Ventil-Tellerfeder 52 diesen freigibt. Bei einem Ausschub der Kolbenstange wird der Ventilstift 43 infolge des höheren Druckes im Ausgleichsraum 25 gegen die Ventil-Schraubenfeder 46 in Ausschub-Richtung 67 bewegt, sodass sich die Ventilscheibe 53 von dem Gehäuse-Deckel 8 abhebt und zum Druckausgleich einen ringförmigen Kanal zwischen sich und dem Gehäuse-Deckel 8 freigibt.

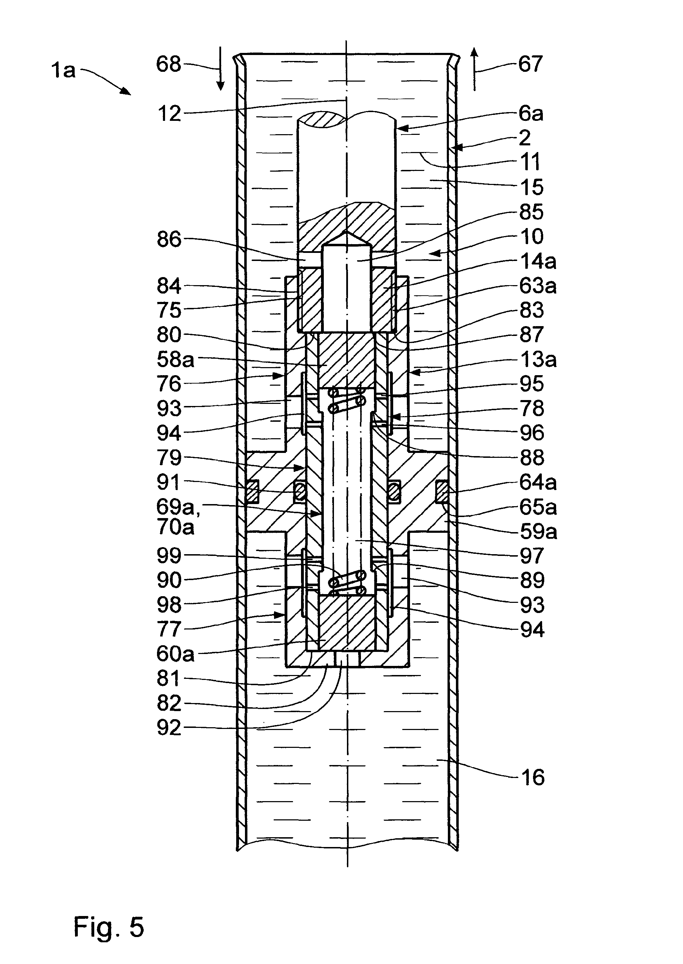

Im Folgenden wird unter Bezugnahme auf die Figur 5 ein zweites Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass die Verschluss-Elemente 58a, 60a zur Beeinflussung der Strömungsquerschnittsfläche relativ zu den Durchström-Kanälen 69a, 70a entlang der Mittel-Längs-Achse 12 verschiebbar sind. Die Kolbenstange 6a weist an dem ersten Kolbenstangen-Ende 14a ein Kolbenstangen-Gewinde 63a auf, auf das der Kolben 13a mit einem Kolben-Innengewinde 75 aufgeschraubt ist. Die Kolben-Scheibe 59a ist an einer der Kolbenstange 6a zugewandten Seite einteilig mit einer hohlzylinderförmigen, ersten Kolben-Hülse 76 ausgebildet, die konzentrisch zu der Mittel-Längs-Achse 12 angeordnet ist. An einer der Kolbenstange 6a abgewandten Seite weist die Kolben-Scheibe 59a eine zweite Kolben-Hülse 77 auf, die ebenfalls konzentrisch zu der Mittel-Längs-Achse 12 angeordnet ist. Die Kolben-Hülsen 76, 77 und die Kolben-Scheibe 59a begrenzen im Wesentlichen einen zylinderförmigen Kolben-Innenraum 78, der sich konzentrisch zu der Mittel-Längs-Achse 12 erstreckt. In den Kolben-Innenraum 78 ist eine hohlzylinderförmige Steuer-Hülse 79 eingeführt, die in radialer Richtung gegen die Kolben-Hülsen 76, 77 und die Kolben-Scheibe 59a anliegt. Mit einer ringförmigen, ersten Stirnwand 80 liegt die Steuer-Hülse 79 gegen die eingeschraubte Kolbenstange 6a und mit einer ringförmigen, zweiten Stirnwand 81 gegen einen die zweite Kolben-Hülse 77 an ihrem freien Ende verschließenden Kolben-Boden 82 an. Die Kolbenstange 6a ist an einem freien Ende der ersten Kolben-Hülse 76 bis zu einem Hülsen-Anschlag 83 in ein Hülsen-Innengewinde 84 eingeschraubt. Alternativ kann die Kolbenstange 6a auch mit der ersten Kolben-Hülse 76 verspannt sein.

Die Kolbenstange 6a weist an ihren ersten Kolbenstangen-Ende 14a eine konzentrisch zu der Mittel-Längs-Achse 12 verlaufende Längs-Bohrung 85 auf, die in Verbindung mit mehreren quer zu der Mittel-Längs-Achse 12 in der Kolbenstange 6a angeordneten Quer-Bohrungen 86 steht. Die Längs-Bohrung 85 und die Quer-Bohrungen 86 verbinden den ersten Teil-Arbeitsraum 15 mit dem Kolben-Innenraum 78. Der Kolben-Boden 82 weist zur Verbindung des zweiten Teil-Arbeitsraums 16 und des Kolben-Innenraums 78 eine konzentrisch zu der Mittel-Längs-Achse 12 verlaufende Boden-Längs-Bohrung 92 auf. Zwischen einer als Anschlag wirkenden Kolbenstangen-Stirnwand 87 und einem ersten Steuer-Hülsen-Anschlag 88 ist innerhalb der Steuer-Hülse 79 das erste Verschluss-Element 58a entlang der Mittel-Längs-Achse 12 verschiebbar geführt. Das erste Verschluss-Element 58a ist als Vollzylinder ausgebildet und liegt in radialer Richtung gegen die Steuer-Hülse 79 an. Das erste Verschluss-Element 58a wird nachfolgend als Zug-Steuerkolben bezeichnet. Das zweite Verschluss-Element 60a ist zwischen dem als Anschlag wirkenden Kolben-Boden 82 und einem zweiten Steuer-Hülsen-Anschlag 89 in entsprechender Weise verschiebbar geführt. Das zweite Verschluss-Element 60a wird im Folgenden als Druck-Steuerkolben bezeichnet. Zwischen dem Zug-Steuerkolben 58a und dem Druck-Steuerkolben 60a ist ein als Schraubenfeder ausgebildetes Feder-Element 90 angeordnet, das gegen die Steuerkolben 58a, 60a anliegt und vorgespannt ist. Die Schraubenfeder 90 ist innerhalb des Kolben-Innenraums 78 konzentrisch zu der Mittel-Längs-Achse 12 angeordnet. Die Steuer-Hülse 79 ist mit einem Hülsen-Dichtring 91 gegen die Kolben-Scheibe 59a abgedichtet, wobei der Hülsen-Dichtring 91 in einer Kolben-Scheiben-Nut aufgenommen ist.

Die erste Kolben-Hülse 76 und die zweite Kolben-Hülse 77 weisen jeweils mehrere quer zu der Mittel-Längs-Achse 12 verlaufende Hülsen-Kanäle 93 auf, die jeweils in eine ringförmige Hülsen-Ausnehmung 94 münden. Durch die Hülsen-Kanäle 93 und die Hülsen-Ausnehmungen 94 gelangt das Dämpfungsfluid 11 bis zu der Steuer-Hülse 79. Ausgehend von der Hülsen-Ausnehmung 94 weist die Steuer-Hülse 79 im Bereich der ersten Kolben-Hülse 76 quer zu der Mittel-Längs-Achse 12 verlaufende erste Zug-Quer-Kanäle 95 und zweite Zug-Quer-Kanäle 96 auf. Die ersten Zug-Quer-Kanäle 95 sind über den Umfang der Steuer-Hülse 79 verteilt angeordnet und durchbrechen die Steuer-Hülse 79 im Bereich zwischen dem Zug-Steuerkolben 58a und dem ersten Steuer-Hülsen-Anschlag 88. Die zweiten Zug-Quer-Kanäle 96 sind entsprechend angeordnet, jedoch durchbrechen sie die Steuer-Hülse 79 im Bereich zwischen dem ersten Steuer-Hülsen-Anschlag 88 und der Kolben-Scheibe 59a. Die Zug-Quer-Kanäle 95, 96 sind derart angeordnet, dass sie eine Verbindung zwischen der Hülsen-Ausnehmung 94 und einem durch die Steuer-Hülse 79 gebildeten Hülsen-Längs-Kanal 97 ausbilden.

Ausgehend von der Hülsen-Ausnehmung 94 der zweiten Kolben-Hülse 77 erstrecken sich quer zu der Mittel-Längs-Achse 12 erste Druck-Quer-Kanäle 98 und zweite Druck-Quer-Kanäle 99 durch die Steuer-Hülse 79. Die ersten Druck-Quer-Kanäle 98 sind über den Umfang der Steuer-Hülse 79 verteilt und zwischen dem Kolben-Boden 82 und dem zweiten Steuer-Hülsen-Anschlag 89 angeordnet. Die zweiten Druck-Quer-Kanäle 99 sind entsprechend angeordnet, wobei diese zwischen dem zweiten Steuer-Hülsen-Anschlag 89 und der Kolben-Scheibe 59a im Bereich der Hülsen-Ausnehmung 94 liegen. Die Druck-Quer-Kanäle 98, 99 verbinden die Hülsen-Ausnehmung 94 mit dem Hülsen-Längs-Kanal 97. Die Hülsen-Kanäle 93, die Hülsen-Ausnehmungen 94, die Zug-Quer-Kanäle 95, 96, der Hülsen-Längs-Kanal 97 und die Druck-Quer-Kanäle 98, 99 bilden zusammen den Zug-Durchström-Kanal 69a und den Druck-Durchström-Kanal 70a aus.

Im Folgenden wird die Funktionsweise des Dämpfers 1a beschrieben. Figur 5 zeigt den Ruhe-Zustand des Kolbens 13a. In diesem Ruhe-Zustand liegt aufgrund der vorgespannten Schraubenfeder 90 der Zug-Steuerkolben 58a gegen die Kolbenstangen-Stirnwand 87 und der Druck-Steuerkolben 60a gegen den Kolben-Boden 82 an. Bei einer Bewegung des Kolbens 13a in Ausschub-Richtung 67 oder in Einschub-Richtung 68 mit einer niedrigen Geschwindigkeit bleibt dieser Ruhe-Zustand des Kolbens 13a im Wesentlichen erhalten. Beispielsweise bei einer Bewegung des Kolbens in Ausschub-Richtung 67 strömt das Dämpfungsfluid 11 aus dem ersten Teil-Arbeitsraum 15 durch die Hülsen-Kanäle 93 und die Hülsen-Ausnehmung 94 der ersten Kolben-Hülse 76 sowie die Zug-Quer-Kanäle 95, 96 in den Hülsen-Längs-Kanal 97. Aus dem Hülsen-Längs-Kanal 97 strömt das Dämpfungsfluid 11 weiter durch die Druck-Quer-Kanäle 98, 99 und die Hülsen-Ausnehmung 94 sowie die Hülsen-Kanäle 93 der zweiten Kolben-Hülse 77 in den zweiten Teil-Arbeitsraum 16. Bei einer Bewegung des Kolbens 13a in Einschub-Richtung 68 strömt das Dämpfungsfluid 11 in entsprechender Weise aus dem zweiten Teil-Arbeitsraum 16 in den ersten Teil-Arbeitsraum 15. Die Durchström-Kanäle 69a, 70a weisen eine wirksame Strömungsquerschnittsfläche auf, durch die die Dämpfungskraft bestimmt wird.

Bei einer Bewegung des Kolbens 13a in Ausschub-Richtung 67 mit einer im Vergleich zu dem oben beschriebenen Fall höheren Geschwindigkeit strömt das Dämpfungsfluid 11 aus dem ersten Teil-Arbeitsraum 15 durch die Quer-Bohrungen 86 und die Längs-Bohrung 85 der Kolbenstange 6a und übt eine Kraft auf den Zug-Steuerkolben 58a in Einschub-Richtung 68 aus. Durch diese Kraft wird der Zug-Steuerkolben 58a relativ zu den Zug-Quer-Kanälen 95, 96 in Einschub-Richtung 68 bewegt, bis der Zug-Steuerkolben 58a gegen den ersten Steuer-Hülsen-Anschlag 88 anliegt. Bei dieser Bewegung verschließt der Zug-Steuerkolben 58a die ersten Zug-Quer-Kanäle 95, wodurch die wirksame Strömungsquerschnittsfläche des Zug-Durchström-Kanals 69a verringert wird. Der Strömungswiderstand für das Dämpfungsfluid 11 und die Dämpfungskraft wird somit erhöht. Die zweiten Zug-Quer-Kanäle 96 bleiben aufgrund des ersten Steuer-Hülsen-Anschlags 88 in jedem Fall durchströmbar. Kommt der Kolben 13a zum Stillstand, nimmt die Kraft des Dämpfungsfluids 11 auf den Zug-Steuerkolben 58a derart ab, dass der Zug-Steuerkolben 58a infolge der Kraft der Schraubenfeder 90 wieder in seinen Ruhe-Zustand zurückkehrt. Bei einer Bewegung des Kolbens 13a in Einschub-Richtung 68 strömt das Dämpfungsfluid 11 aus dem zweiten Teil-Arbeitsraums 16 durch die Boden-Längs-Bohrung 92 und übt eine Kraft in Ausschub-Richtung 67 auf den Druck-Steuerkolben 60a aus. Der Druck-Steuerkolben 60a wirkt zu der Veränderung der wirksamen Strömungsquerschnittsfläche in entsprechender Weise mit den Druck-Quer-Kanälen 98, 99 zusammen.

Die Anordnung und Anzahl der Zug-Quer-Kanäle 95, 96 und der Druck-Quer-Kanäle 98, 99 bestimmen die Dämpfungskraft-Geschwindigkeits-Kennlinie in Ausschub-Richtung 67 und in Einschub-Richtung 68. Die Anordnung mehrerer entlang der Mittel-Längs-Achse 12 beabstandeter Zug-Quer-Kanäle 95, welche durch den Zug-Steuerkolben 58a bei einer Bewegung des Kolbens 13a in Ausschub-Richtung 67 verschließbar sind, ermöglicht ein sukzessives Verschließen einzelner Zug-Quer-Kanäle 95 in Abhängigkeit von der Ausschub-Geschwindigkeit. Entsprechendes gilt für eine entlang der Mittel-Längs-Achse 12 beabstandete Anordnung der Druck-Quer-Kanäle 98.

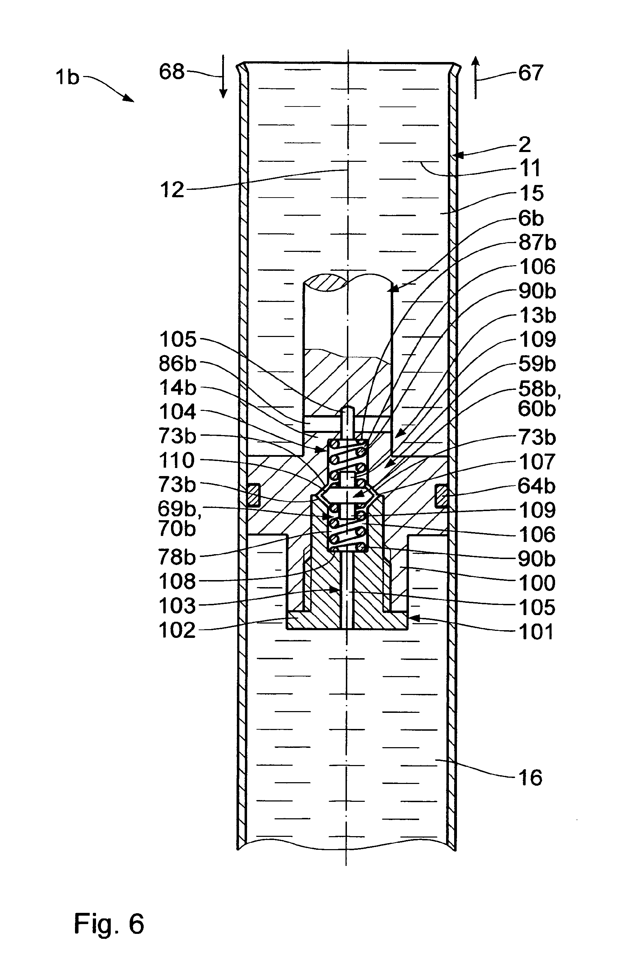

Im Folgenden wird unter Bezugnahme auf die Figur 6 ein drittes Ausführungsbeispiel der Erfindung beschrieben. Identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b. Der wesentliche Unterschied gegenüber den vorangegangenen Ausführungsbeispielen besteht darin, dass das erste Verschluss-Element 58b und das zweite Verschluss-Element 60b einteilig ausgebildet sind. Die Kolbenstange 6b ist mit dem ersten Kolbenstangen-Ende 14b einteilig mit der Kolben-Scheibe 59b ausgebildet. An einer der Kolbenstange 6b gegenüberliegenden Seite der Kolben-Scheibe 59b ist einteilig mit dieser eine hohlzylinderförmige Befestigungs-Hülse 100 ausgebildet. Die Befestigungs-Hülse 100 ist durch einen Verschluss-Stift 101 verschlossen, wobei dieser beispielsweise formschlüssig mittels einer Gewindeverbindung oder reibschlüssig mittels einer Presspassung an der Befestigungs-Hülse 100 befestigt ist. Der Verschluss-Stift 101 weist einen ersten Stift-Anschlag 102 auf, der im montierten Zustand des Verschluss-Stiftes 101 gegen die Befestigungs-Hülse 100 anliegt. Der Verschluss-Stift 101 erstreckt sich dabei bis ungefähr zu der Mitte der Kolben-Scheibe 59b. Der Verschluss-Stift 101, die Kolben-Scheibe 59b und die Kolbenstange 6b bilden für das Dämpfungsfluid 11 einen in Ausschub-Richtung 67 und in Einschub-Richtung 68 wirkenden Durchström-Kanal 69b, 70b aus. Der Durchström-Kanal 69b, 70b ist unterteilt in einen konzentrisch zu der Mittel-Längs-Achse 12 verlaufenden Stift-Längs-Kanal 103, einen in Ausschub-Richtung 67 daran anschließenden Kolben-Längs-Kanal 104 und mehrere Quer-Bohrungen 86b der Kolbenstange 6b. Der Stift-Längs-Kanal 103 und der Kolben-Längs-Kanal 104 weist jeweils einen ersten Kanal-Abschnitt 105, einen daran angrenzenden zweiten Kanal-Abschnitt 106 mit einem erweiterten Durchmesser und einen daran anschließenden, sich kegelförmig erweiternden dritten Kanal-Abschnitt 107 auf. Die dritten Kanal-Abschnitte 107 der Längs-Kanäle 103, 104 gehen ineinander über, sodass die zweiten und dritten Kanal-Abschnitte 106, 107 der Längs-Kanäle 103, 104 zu einer radial und mittig durch die Kolben-Scheibe 59b verlaufenden Symmetrieebene symmetrisch sind. Die zweiten und dritten Kanalabschnitte 106, 107 bilden einen Kolben-Innenraum 78b aus, wobei durch die dritten Kanal-Abschnitte 107 aufeinander zulaufende, ringförmige Anlageflächen 73b gebildet werden. In dem Kolben-Innenraum 78b ist zwischen zwei als Schraubenfedern ausgebildeten Feder-Elementen 90b das Verschluss-Element 58b, 60b angeordnet. Das der Kolbenstange 6b zugewandte Feder-Element 90b liegt gegen die Kolbenstangen-Stirnwand 87b und das Verschluss-Element 58b, 60b an, wohingegen das dem Verschluss-Stift 101 zugewandte Feder-Element 90b gegen das Verschluss-Element 58b, 60b und einen zweiten Stift-Anschlag 108 anliegt, der durch den ersten und zweiten Kanal-Abschnitt 105, 106 gebildet wird. Das Verschluss-Element 58b, 60b weist zwei einander gegenüberliegende Zentrier-Stifte 109 auf, die in die Feder-Elemente 90b eingreifen. Das Verschluss-Element 58b, 60b ist scheibenförmig ausgebildet, wobei dieses sich in einem Randbereich in radialer Richtung verjüngt. Die dadurch ausgebildeten Kegelflächen 110 verlaufen parallel zu den zugehörigen Anlageflächen 73b. Alternativ können die Kegelflächen 110 einen beliebigen Winkel mit den zugehörigen Anlageflächen 73b einschließen.

Im Folgenden wird die Funktionsweise des Dämpfers 1b beschrieben. Figur 6 zeigt einen Ruhe-Zustand des Kolbens 13b, der bei einer Bewegung des Kolbens 13b mit niedriger Geschwindigkeit im Wesentlichen unverändert bleibt. Das Dämpfungsfluid 11 strömt bei niedriger Geschwindigkeit des Kolbens 13b durch den Durchström-Kanal 58b, 60b, wobei der zwischen den Anlageflächen 73b und den Kegelflächen 110 ausgebildete Spalt durch die mittige Lage des Verschluss-Elements 58b, 60b in den Kolben-Innenraum 78b eine maximale Breite aufweist. Bei einer Bewegung des Kolbens 13b in Ausschub-Richtung 67 wirkt das Verschluss-Element 58b, 60b mit dem Durchström-Kanal 69b, 70b als Kegelventil. Das Dämpfungsfluid 11 strömt aus dem ersten Teil-Arbeitsraum 15 durch die Quer-Bohrungen 86b in den Kolben-Längs-Kanal 104, wo es auf das Verschluss-Element 58b, 60b eine Kraft in Einschub-Richtung 68 ausübt. Durch die Kraft wird das Verschluss-Element 58b, 60b relativ zu dem Kolben 13b in Einschub-Richtung 68 bewegt, sodass der Spalt zwischen der Anlagefläche 73b des Verschluss-Stiftes 101 und der zugehörigen Kegelfläche 110 verringert wird. Dadurch wird die wirksame Strömungsquerschnittsfläche verringert, wodurch die Dämpfungskraft mit zunehmender Geschwindigkeit des Kolbens 13b kontinuierlich verändert wird. Durch die verringerte Strömungsquerschnittsfläche steigt die Dämpfungskraft extrem progressive an. Um ein vollständiges Verschließen des Durchström-Kanals 69b, 70b zu verhindern, können zusätzlich nicht dargestellte Bypass-Bohrungen oder Anschläge für das Verschluss-Element 58b, 60b vorgesehen sein. Bei einer Bewegung des Kolbens 13b in Einschub-Richtung 68 wirkt das Verschluss-Element 58b, 60b in entsprechender Weise. Die Verschiebbarkeit des Verschluss-Elements 58b, 60b entlang der Mittel-Längs-Achse 12 kann durch unterschiedliche Feder-Elemente 90b in Ausschub-Richtung 67 und in Einschub-Richtung 68 unterschiedlich sein.

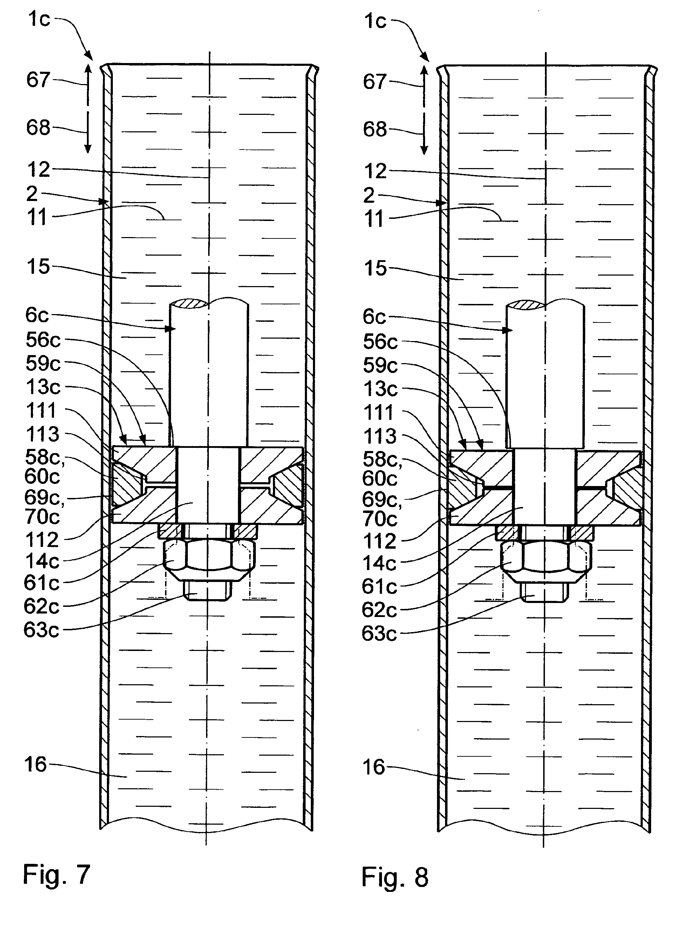

Nachfolgend wird unter Bezugnahme auf die Figuren 7 und 8 ein viertes Ausführungsbeispiel der Erfindung beschrieben. Identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c. Der wesentliche Unterschied gegenüber den vorangegangenen Ausführungsbeispielen besteht darin, dass das erste Verschluss-Element 58c und das zweite Verschluss-Element 60c einteilig ausgebildet sind, wobei das Verschluss-Element 58c, 60c ringförmig ausgebildet und bei einer Bewegung des Kolbens 13c elastisch verformbar ist. Das Verschluss-Element 58c, 60c wird nachfolgend als Verschluss-Ring bezeichnet. Die Kolben-Scheibe 59c ist zweiteilig aus einem ersten Kolben-Bauteil 111 und einem zweiten Kolben-Bauteil 112 aufgebaut. Die Kolben-Bauteile 111, 112 sind auf dem ersten Kolbenstangen-Ende 14c relativ zueinander entlang der Mittel-Längs-Achse 12 verschiebbar. Die Kolben-Bauteile 111, 112 sind durch die Kolbenstangen-Sicherungsmutter 62c auf der Kolbenstange 6c gesichert. Zwischen den Kolben-Bauteilen 111, 112 ist der Verschluss-Ring 58c, 60c angeordnet, wobei dieser in Richtung der Mittel-Längs-Achse 12 keilförmig zuläuft. Der Verschluss-Ring 58c, 60c liegt gegen die Kolben-Bauteile 111, 112 an, wobei diese für den Verschluss-Ring 58c , 60c eine keilförmige Ring-Nut 113 ausbilden, deren Breite bei einer Bewegung der Kolben-Bauteile 111, 112 zueinander veränderbar ist. Figur 7 zeigt den Ruhe-Zustand des Dämpfers 1c. Der elastisch verformbare Verschluss-Ring 58c, 60c ist vorgespannt und drückt das erste Kolben-Bauteil 111 gegen den Kolbenstangen-Anschlag 56c und das zweite Kolben-Bauteil 112 gegen die Distanzscheibe 61c. Zwischen den Kolben-Bauteilen 111, 112, dem Verschluss-Ring 58c, 60c und dem inneren Gehäuse 2 verbleibt ein Ringspalt, der den Durchström-Kanal 69c, 70c bildet. Bei einer Bewegung des Kolbens 13c mit niedriger Geschwindigkeit bleibt der in Figur 7 dargestellte Ruhe-Zustand im Wesentlichen erhalten, sodass das Dämpfungsfluid 11 durch den Durchström-Kanal 69c, 70c strömen kann. Durch die wirksame Strömungsquerschnittsfläche ist die Dämpfungskraft bestimmt. Figur 8 zeigt eine Bewegung des Kolbens 13c in Ausschub-Richtung 67 mit einer im Vergleich zu Figur 7 höheren Geschwindigkeit. Das Dämpfungsfluid 11 in dem ersten Teil-Arbeitsraums 15 übt auf das erste Kolben-Bauteil 111 eine Kraft in Einschub-Richtung 68 aus, sodass dieses auf das zweite Kolben-Bauteil 112 zubewegt wird. Die Breite der Ring-Nut 113 wird dadurch verringert, sodass der Verschluss-Ring 58c, 60c seinen Durchmesser erweitert und in radialer Richtung gegen das innere Gehäuse 2 gedrückt wird. Mit zunehmender Geschwindigkeit des Kolbens 13c wird die wirksame Strömungsquerschnittsfläche des Durchström-Kanals 69c, 70c verringert, bis der Verschluss-Ring 58c, 60c gegen das innere Gehäuse 2 vollständig anliegt. Der Strömungswiderstand für das Dämpfungsfluid 11 wird somit erhöht, wodurch die Dämpfungskraft extrem progressiv steigt.

Der Verschluss-Ring 58c, 60c kann aus Kunststoff, insbesondere aus einem Elastomer, oder aus Metall bestehen, wobei der Verschluss-Ring 58c, 60c im letzteren Fall als Feder-Ring ausgebildet ist. Alternativ zu der keilförmigen Ausbildung des Verschluss-Rings 58c, 60c und der Ring-Nut 113 ist, insbesondere bei der Verwendung eines Elastomers, auch eine rechtwinklige Ausbildung möglich. Durch den Verschluss-Ring 58c, 60c kann die Dämpfungskraft infolge des kontinuierlichen Verschließens des Durchström-Kanals 69c, 70c in Abhängigkeit von der Geschwindigkeit kontinuierlich verändert werden. Bei einer Bewegung des Kolbens 13c in Einschub-Richtung 68 übt das im zweiten Teil-Arbeitsraum 16 befindliche Dämpfungsfluid 11 eine Kraft auf das zweite Kolben-Bauteil 112 aus, wobei der Verschluss-Ring 58c, 60c entsprechend zu dem oben beschriebenen Fall wirkt.

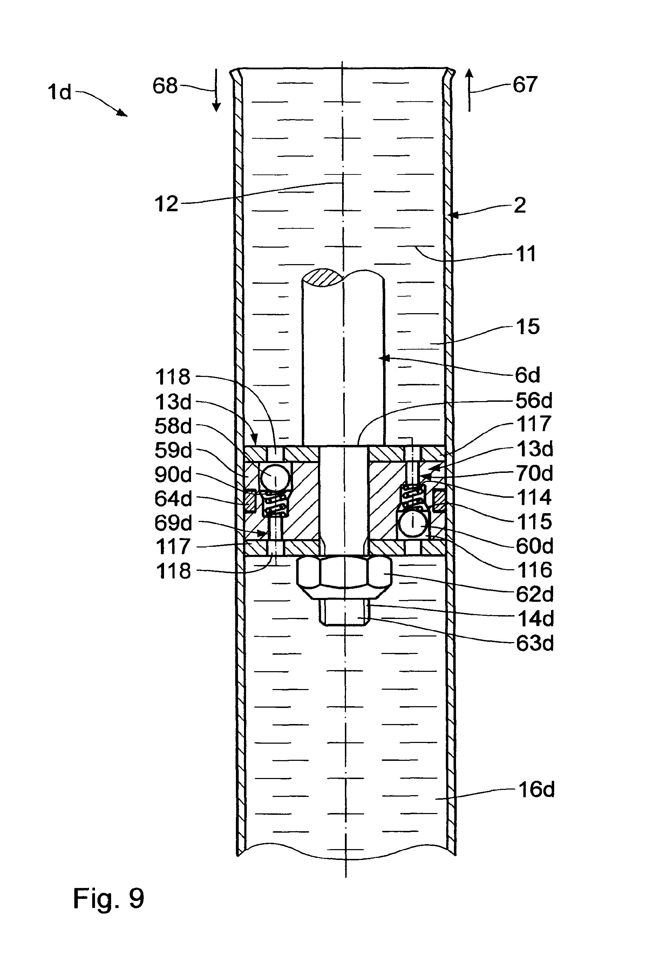

Im Folgenden wird unter Bezugnahme auf die Figur 9 ein fünftes Ausführungsbeispiel der Erfindung beschrieben. Identische Teile erhalten dieselben Bezugszeichen, wie bei dem ersten Ausführungsbeispiel, auf dessen Beschreibung hiermit verwiesen wird. Konstruktiv identische, jedoch funktionell gleichartige Teile erhalten dieselben Bezugszeichen mit einem nachgestellten d. Der wesentliche Unterschied gegenüber den vorangegangenen Ausführungsbeispielen besteht darin, dass die Verschluss-Elemente 58d, 60d als Kugeln ausgebildet sind. Das Verschluss-Element 58d wird im Folgenden als Zug-Verschluss-Kugel und das Verschluss-Element 60d als Druck-Verschluss-Kugel bezeichnet. Die Kolben-Scheibe 59d des Kolbens 13d weist entsprechend zu dem ersten Ausführungsbeispiel Zug-Durchström-Kanäle 69d und Druck-Durchström-Kanäle 70d auf, die parallel zu der Mittel-Längs-Achse 12 verlaufen. Die Durchström-Kanäle 69d, 70d weisen einen gestuften Querschnitt auf, wobei jeder Durchström-Kanal 69d, 70d im Bereich der Kolben-Scheibe 59d einen ringförmigen Anschlag 114 und einen ringförmigen Kegelsitz 115 aufweist. Angrenzend an den Kegelsitz 115 weisen die Durchström-Kanäle 69d, 70d einen Aufnahmeraum 116 für die Verschluss-Kugeln 58d, 60d auf. Zwischen den Verschluss-Kugeln 58d, 60d und den Anschlägen 114 ist jeweils ein Feder-Element 90d in Form einer Schraubenfeder angeordnet. Um ein Herausfallen der Verschluss-Kugeln 58d, 60d zu verhindern, ist an beiden Seiten der Kolben-Scheibe 59d jeweils eine Sicherungs-Scheibe 117 mit Scheiben-Bohrungen 118 vorgesehen. Die Scheiben-Bohrungen 118 weisen einen Durchmesser derart auf, dass die Verschluss-Kugeln 58d, 60d in dem Aufnahmeraum 116 eingeschlossen sind.

Im Folgenden wird die Funktionsweise des Dämpfers 1d beschrieben. Figur 9 zeigt den Ruhe-Zustand des Kolbens 13d. Die Verschluss-Kugeln 58d, 60d verschließen die Durchström-Kanäle 69d, 70d nicht. Bei einer Bewegung des Kolbens 13d in Ausschub-Richtung 67 strömt das im ersten Teil-Arbeitsraum 15 befindliche Dämpfungsfluid 11 durch die Scheiben-Bohrungen 118 der der Kolbenstange 6d zugewandten Sicherungs-Scheibe 117. Auf die Zug-Verschluss-Kugeln 58d wird eine geringe Kraft in Einschub-Richtung 68 ausgeübt, die die Lage der Zug-Verschluss-Kugeln 58d nur unwesentlich verändert. Das Dämpfungsfluid 11 kann an den Zug-Verschluss-Kugeln 58d vorbei durch die Zug-Durchström-Kanäle 69d in den zweiten Teil-Arbeitsraum 16d strömen. Die Druck-Verschluss-Kugeln 60d werden durch das Dämpfungsfluid 11 gegen die Scheiben-Bohrungen 118 der der Sicherungsmutter 62d zugewandten Sicherungs-Scheibe 117 gepresst, sodass die Druck-Durchström-Kanäle 70d verschlossen werden. Bei einer Bewegung des Kolbens 13d mit einer höheren Geschwindigkeit bleiben die Druck-Durchström-Kanäle 70d verschlossen. Die Zug-Verschluss-Kugeln 58d werden durch das Dämpfungsfluid 11 in Richtung der zugehörigen Kegelsitze 115 gepresst, wodurch die wirksame Strömungsquerschnittsfläche der Zug-Durchström-Kanäle 69d verringert wird. Die Dämpfungskraft des Dämpfers 1d wird somit bei höheren Geschwindigkeiten extrem progressiv erhöht. Bei einer Bewegung des Kolbens 13d in Einschub-Richtung 68 wirken die Verschluss-Kugeln 58d, 60d in entsprechender Weise.

Zusätzlich können Bypass-Bohrungen oder Anschläge für die Verschluss-Kugeln 58d, 60d vorgesehen sein, um ein vollständiges Verschließen der Durchström-Kanäle 69d, 70d zu verhindern. Weiterhin können die Schraubenfedern 90d unterschiedliche Federstärken aufweisen, sodass die einzelnen Zug-Verschluss-Kugeln 58d oder die einzelnen Druck-Verschluss-Kugeln 60d sukzessive in ihren zugehörigen Kegelsitz 115 gedrückt werden. Auf diese Weise kann die Dämpfungskraft in Abhängigkeit von der Geschwindigkeit sukzessive infolge der sich verringernden Strömungsquerschnittsfläche verändert werden. Alternativ ist eine Ausbildung der Schraubenfedern 90d derart möglich, dass die Dämpfungskraft stetig verändert wird.

## Patentansprüche

1. Dämpfer mit
a. einem eine Mittel-Längs-Achse (12) aufweisenden und einen Arbeitsraum (10) umschließenden Gehäuse (2),
b. einem in dem Arbeitsraum (10) befindlichen Dämpfungsfluid (11),
c. einer das Gehäuse (2) an einem ersten Gehäuse-Ende (4) abschließenden Führungs- und Dichtungseinheit (5),
d. einer durch die Führungs- und Dichtungseinheit (5) abgedichtet aus dem ersten Gehäuse-Ende (4) herausgeführten Kolbenstange (6; 6a ― 6d),
e. einem dem ersten Gehäuse-Ende (4) gegenüberliegenden zweiten Gehäuse-Ende (7), und
f. einem in dem Gehäuse (2) entlang der Mittel-Längs-Achse (12) geführten und an der Kolbenstange (6; 6a ― 6d) befestigten Kolben (13; 13a-13d),
i. der den Arbeitsraum (10) in einen dem ersten Gehäuse-Ende (4) zugewandten ersten Teil-Arbeitsraum (15) und einen dem zweiten Gehäuse-Ende (7) zugewandten zweiten Teil-Arbeitsraum (16) unterteilt,
ii. der mindestens einen Durchström-Kanal (69, 70; 69a, 70a - 69d, 70d) zum Verbinden der Teil-Arbeitsräume (15, 16) mit einer für das durchströmende Dämpfungsfluid (11) wirksamen Strömungsquerschnittsfläche aufweist, und
iii. der mindestens ein Verschluss-Element (58, 60; 58a, 60a ― 58d, 60d) zur Veränderung der wirksamen Strömungsquerschnittsfläche in Abhängigkeit einer Geschwindigkeit des Kolbens (13; 13a ― 13d) bei einer Bewegung entlang der Mittel-Längs-Achse (12) aufweist.

2. Schwingungsdämpfer nach Anspruch 1, **dadurch gekennzeichnet, dass** das mindestens eine Verschluss-Element (58, 60; 58c, 60c) zur Veränderung der Strömungsquerschnittsfläche elastisch verformbar ist.

3. Schwingungsdämpfer nach Anspruch 1, **dadurch gekennzeichnet, dass** das mindestens eine Verschluss-Element (58a, 60a; 58b, 60b; 58d, 60d) zur Veränderung der Strömungsquerschnittsfläche relativ zu dem mindestens einen Durchström-Kanal (69a, 70a; 69b, 70b; 69d, 70d) entlang der Mittel-Längs-Achse (12) verschiebbar ist.

4. Schwingungsdämpfer nach einem der Ansprüche 1 bis 3, **dadurch gekennzeichnet, dass** mehrere Durchström-Kanäle (69, 70; 69a, 70a; 69d, 70d) vorgesehen sind, die zur Veränderung der Strömungsquerschnittsfläche in Abhängigkeit von der Geschwindigkeit des Kolbens (13; 13a ; 13d) sukzessive zumindest teilweise verschließbar sind.

5. Schwingungsdämpfer nach Anspruch 2 oder 4, **dadurch gekennzeichnet, dass** das mindestens eine Verschluss-Element (58, 60) eine konzentrisch zu der Mittel-Längs-Achse (12) angeordnete Tellerfeder ist und der Kolben (13) eine der Tellerfeder gegenüberliegende Anlagefläche (73) aufweist, wobei die Tellerfeder und die Anlagefläche (73) bei ruhendem Kolben (13) zueinander einen Winkel b einschließen, für den gilt: b > 0 °.

6. Schwingungsdämpfer nach Anspruch 1 oder 2, **dadurch gekennzeichnet, dass** das mindestens eine Verschluss-Element (58c, 60c) ein zwischen einem ersten Kolben-Bauteil (111) und einem relativ zu dem ersten Kolben-Bauteil (111) entlang der Mittel-Längs-Achse (12) verschiebbaren zweiten Kolben-Bauteil (112) angeordneter Ring ist, der gegen das Gehäuse (2) anlegbar ist.

7. Schwingungsdämpfer nach Anspruch 3 oder 4, **dadurch gekennzeichnet, dass** mindestens eine Feder-Element (90; 90b; 90d) zum Zusammenwirken mit dem mindestens einen Verschluss-Element (58a, 60a; 58b, 60b; 58d, 60d) vorgesehen ist.

8. Schwingungsdämpfer nach Anspruch 7, **dadurch gekennzeichnet, dass** das mindestens eine Feder-Element (90; 90b; 90d) als gegen das mindestens eine Verschluss-Element (58, 60a; 58b, 60b; 58d, 60d) anliegende Schraubenfeder ausgebildet ist.

9. Schwingungsdämpfer nach Anspruch 7 oder 8, **dadurch gekennzeichnet, dass** ein Feder-Element (90) gegen mehrere Verschluss-Elemente (58a, 60a) oder ein Verschluss-Element (58b, 60b) gegen mehrere Feder-Elemente (90b) anliegt.

10. Schwingungsdämpfer nach Anspruch 7 oder 8, **dadurch gekennzeichnet, dass** mehrere Verschluss-Elemente (58d, 60d) vorgesehen sind, wobei jedem Verschluss-Element (58d, 60d) ein Feder-Element (90d) zugeordnet ist und die Feder-Elemente (90d) zumindest teilweise unterschiedliche Federstärken aufweisen.

11. Schwingungsdämpfer nach einem der Ansprüche 1 bis 10, **dadurch gekennzeichnet, dass** bei einer betragsmäßigen Erhöhung der Geschwindigkeit die wirksame Strömungsquerschnittsfläche verkleinert wird.
